# EUROPEAN PATENT SPECIFICATION

(11) **EP 4 443 345 B1**
(45) Date of publication and mention of the grant of the patent: **15.04.2026**
(21) Application number: 22900862.8
(22) Date of filing: 01.09.2022
(51) Int. Cl.: G06N 3/0985, G06N 3/096

(54) **MACHINE LEARNING DEVICE, MACHINE LEARNING METHOD, AND MACHINE LEARNING PROGRAM**
MASCHINENLERNVORRICHTUNG, MASCHINENLERNVERFAHREN UND MASCHINENLERNPROGRAMM
DISPOSITIF D'APPRENTISSAGE AUTOMATIQUE, PROCÉDÉ D'APPRENTISSAGE AUTOMATIQUE ET PROGRAMME D'APPRENTISSAGE AUTOMATIQUE

(30) Priority: 01.12.2021 JP 2021195454
(43) Date of publication of application: 09.10.2024
(73) Proprietor: JVCKENWOOD Corporation, Yokohama-shi, Kanagawa 2210022 (JP)
(72) Inventor: KIDA Shingo, Yokohama-shi Kanagawa 221-0022 (JP)
(74) Representative: Wimmer, Hubert
(86) International application number: PCT/JP2022/032977
(87) International publication number: WO 2023/100427

(56) References cited:
- WO-A1-2021/133458
- US-A1- 2020 097 757
- CHERAGHIAN ALI ET AL: "Semantic-aware Knowledge Distillation for Few-Shot Class-Incremental Learning", 20 June 2021, 2021 IEEE/CVF CONFERENCE ON COMPUTER VISION AND PATTERN RECOGNITION (CVPR), IEEE, PAGE(S) 2534 - 2543, XP034007673
- ZHU CHENCHEN; CHEN FANGYI; AHMED UZAIR; SHEN ZHIQIANG; SAVVIDES MARIOS: "Semantic Relation Reasoning for Shot-Stable Few-Shot Object Detection", 2021 IEEE/CVF CONFERENCE ON COMPUTER VISION AND PATTERN RECOGNITION (CVPR), IEEE, 20 June 2021 (2021-06-20), pages 8778 - 8787, XP034010532, DOI: 10.1109/CVPR46437.2021.00867

## Description

### TECHNICAL FIELD

The present invention relates to machine learning technologies.

### BACKGROUND ART

Human beings can learn new knowledge through experiences over a prolonged period of time and can maintain old knowledge without forgetting it. Meanwhile, the knowledge of a convolutional neutral network (CNN) depends on the dataset used in learning. To adapt to a change in data distribution, it is necessary to re-train CNN parameters in response to the entirety of the dataset. In CNN, the precision estimation for old tasks will be decreased as new tasks are learned. Thus, catastrophic forgetting cannot be avoided in CNN. Namely, the result of learning old tasks is forgotten as new tasks are being learned in successive learning.

Incremental learning or continual learning is proposed as a scheme to avoid catastrophic forgetting. Continual learning is a learning method that improves a current trained model to learn new tasks and new data as they occur, instead of training the model from scratch.

On the other hand, since new tasks often have only a few pieces of sample data available, few-shot learning has been proposed as a method for efficient learning with a small amount of training data. In few-shot learning, new tasks are learned using another small amount of parameters without relearning parameters that have been learned once.

A method called incremental few-shot learning (IFSL) has been proposed, which combines continual learning, where a novel class is learned without catastrophic forgetting of the result of learning the base class, and few-shot learning, where a novel class with fewer examples as compared to the base class is learned (Non-Patent Literature 1). In incremental few-shot learning, base classes can be learned from a large dataset and novel classes can be learned from a small number of sample data pieces.

[Non-Patent Literature 1] Cheraghian, A., Rahman, S., Fang, P., Roy, S. K., Petersson, L., & Harandi, M. (2021). Semantic-aware Knowledge Distillation for Few-Shot Class-Incremental Learning. In Proceedings of the IEEE/CVF Conference on Computer Vision and Pattern Recognition (pp. 2534-2543)

### SUMMARY OF INVENTION

As an incremental few-shot learning method, there is Semantic-aware Knowledge Distillation (SaKD) described in Non-Patent Literature 1. In incremental few-shot learning, SaKD uses semantic (meaning) information of each class as ground truth (correct answer data) for image classification tasks. In general, an image dataset to which semantic information has been added can be used at the time of pre-learning of basic classes. However, semantic information may not be added to images used at the time of learning of novel classes. In order to learn a novel class, SaKD needs semantic information corresponding to an image of the novel class as the correct answer data, and there is a problem that images without semantic information cannot be learned.

The present invention addresses the issue described above, and a general purpose thereof is to provide a machine learning technology that allows for learning of novel classes without semantic information.

In order to solve the aforementioned problems, a machine learning device, method and program for performing incremental learning of an image classification task, as set forth in the appended claims are provided.
[Fig. 1] Fig. 1 is a configuration diagram of a conventional machine learning device.
[Fig. 2A] Fig. 2A is a diagram explaining the configuration and operation of a machine learning device according to the present embodiment at the time of learning a base class.
[Fig. 2B] Fig. 2B is a diagram explaining the configuration and operation of a machine learning device according to the present embodiment at the time of learning a pseudo few-shot class.
[Fig. 2C] Fig. 2C is a diagram explaining the configuration and operation of a machine learning device according to the present embodiment at the time of learning a novel class.
[Fig. 3] Fig. 3 is a flowchart explaining an incremental few-shot learning procedure performed by the machine learning device according to the present embodiment.

### DESCRIPTION OF EMBODIMENTS

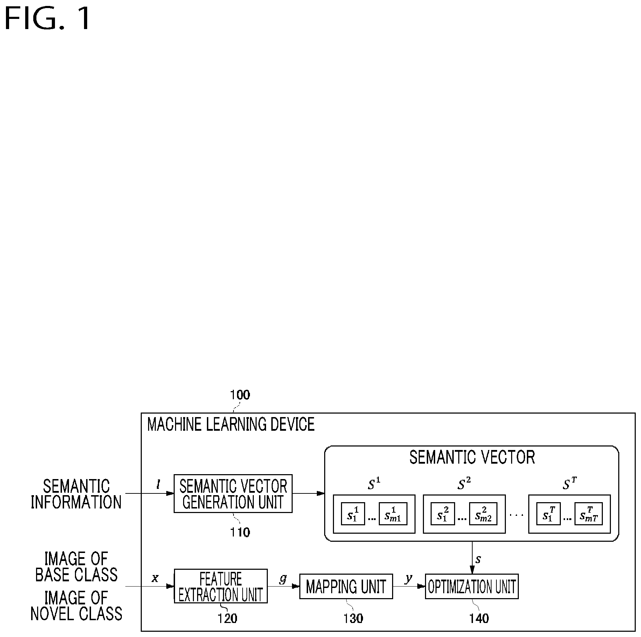

Fig. 1 is a configuration diagram of a conventional machine learning device 100. The machine learning device 100 includes a semantic vector generation unit 110, a feature extraction unit 120, a mapping unit 130, and an optimization unit 140.

In SaKD, it is assumed that semantic information for an input image is given as correct answer data when learning the base class and when learning a new class. The semantic information is, for example, in the case of an image of a cat, text information such as black or male added to the image of the cat.

At the time of the learning of a base class, the image of the base class and semantic information thereof are input to the machine learning device 100.

The semantic vector generation unit 110 converts semantic information 1 of the image of the base class into a semantic vector s, and provides the semantic vector s to the optimization unit 140 as correct answer data.

The feature extraction unit 120 extracts a feature vector g from an image x of the base class and provides the feature vector g to the mapping unit 130.

The mapping unit 130 infers a semantic vector y from the feature vector g of the image x of the base class and provides the semantic vector y to the optimization unit 140.

The optimization unit 140 calculates the distance in a semantic space between the inferred semantic vector y of the base class and the correct answer semantic vector s as a loss, and optimizes the parameters of the feature extraction unit 120 and the parameters of the mapping unit 130 such that the loss is minimized.

In the same manner, at the time of the learning of a novel class, an image of the novel class and semantic information thereof are input to the machine learning device 100.

The semantic vector generation unit 110 converts semantic information 1 of the image of the novel class into a semantic vector s, and provides the semantic vector s to the optimization unit 140 as correct answer data.

The feature extraction unit 120 extracts a feature vector g from an image x of the novel class and provides the feature vector g to the mapping unit 130.

The mapping unit 130 infers a semantic vector y from the feature vector g of the image x of the novel class and provides the semantic vector y to the optimization unit 140.

The optimization unit 140 calculates the distance in a semantic space between the inferred semantic vector y of the novel class and the correct answer semantic vector s as a loss, and optimizes the parameters of the feature extraction unit 120 and the parameters of the mapping unit 130 such that the loss is minimized.

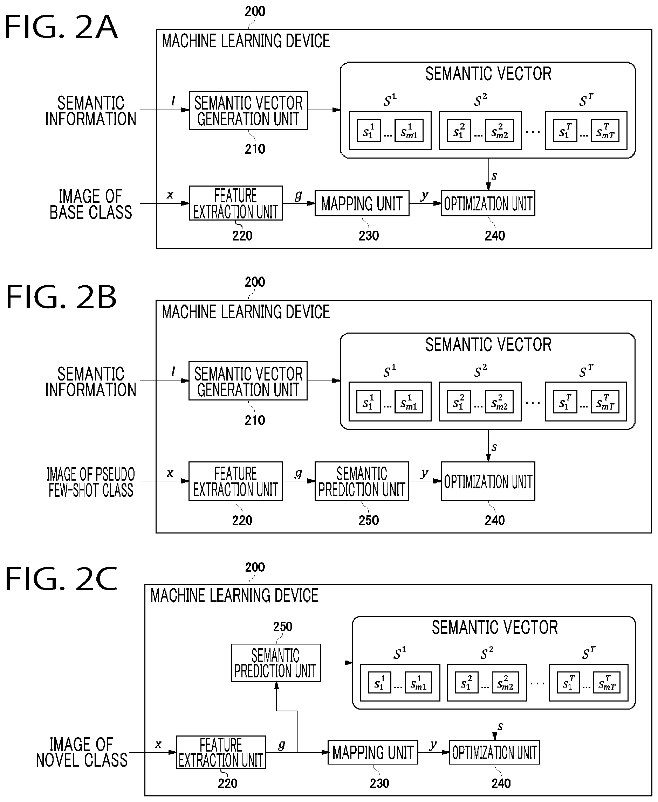

Fig. 2A to Fig. 2C are configuration diagrams of a machine learning device 200 according to an embodiment of the present invention. The machine learning device 200 includes a semantic vector generation unit 210, a feature extraction unit 220, a mapping unit 230, and a semantic prediction unit 250.

Images are used as data input to the machine learning device 200 in the figures. However, in embodiments not falling within the scope of the claims, the input data may be arbitrary data not limited to images.

Fig. 2A is a diagram explaining the configuration and operation of a machine learning device 200 at the time of learning a base class.

At the time of the learning of a base class, the image of the base class and semantic information thereof are input to the machine learning device 200. The operation at the time of the learning of the base class is the same as that at the time of the learning of a base class in the conventional machine learning device 100.

The semantic vector generation unit 210 converts semantic information 1 of the image of the base class into a semantic vector s, and provides the semantic vector s to the optimization unit 240 as correct answer data.

The feature extraction unit 220 extracts a feature vector g from an image x of the base class and provides the feature vector g to the mapping unit 230.

The mapping unit 230 infers a semantic vector y from the feature vector g of the base class and provides the semantic vector y to the optimization unit 240.

The optimization unit 240 calculates the distance in a semantic space between the estimated semantic vector y of the base class and the correct answer semantic vector s as a loss, and optimizes the parameters of the feature extraction unit 220 and the parameters of the mapping unit 230 such that the loss is minimized.

Fig. 2B is a diagram explaining the configuration and operation of the machine learning device 200 at the time of learning a pseudo few-shot class. In Fig. 2B, the parameters of the feature extraction unit 220 that has learned the base class shown in Fig. 2A are fixed for use.

An image of a pseudo few-shot class is generated from the base class. For example, five images of the base class are randomly selected, and the pseudo few-shot class is meta-learned by sequentially inputting the images into the machine learning device 200 in an episodic format as images of the pseudo few-shot class.

At the time of the meta-learning of the pseudo few-shot class, the images of the pseudo few-shot class and semantic information thereof are input to the machine learning device 200.

The semantic vector generation unit 210 converts semantic information 1 of the images of the pseudo few-shot class into a semantic vector s, and provides the semantic vector s to the optimization unit 240 as correct answer data.

The feature extraction unit 220 extracts a feature vector g from an image x of the pseudo few-shot class and provides the feature vector g to the semantic prediction unit 250.

The semantic prediction unit 250 is a module similar to the mapping unit 230, and the parameters of the mapping unit 230 that has learned the base class are used for the initial parameters of the semantic prediction unit 250.

The semantic prediction unit 250 infers a semantic vector y from the feature vector g of the pseudo few-shot class and provides the semantic vector y to the optimization unit 240.

The optimization unit 240 calculates the distance in a semantic space between the estimated semantic vector y of the pseudo few-shot class and the correct answer semantic vector s as a loss, and optimizes the parameters of the semantic prediction unit 250 such that the loss is minimized. Since the parameters are fixed in the feature extraction unit 220 so as not to forget the knowledge of the base class, the parameters are not optimized here. Thereby, the semantic prediction unit 250 is trained in advance in a meta-learning process using the pseudo few-shot class.

For the loss function during meta-learning, the cosine distance of the semantic estimated vector y output from the semantic prediction unit 250 and the semantic correct answer vector s output from the semantic vector generation unit 210 are used, and the learning is proceeded such that this cosine distance is minimized, that is, the semantic estimated vector y approaches the semantic correct answer vector **s.**

Fig. 2C is a diagram explaining the configuration and operation of the machine learning device 200 at the time of learning a novel class. In Fig. 2C, the parameters of the feature extraction unit 220 that has learned the base class shown in Fig. 2A are fixed for use.

An image of the novel class may not have semantic information added to the image. A learning method used for an image of the novel class for which semantic information is not added will be explained.

At the time of the learning of a novel class, an image of the novel class is input to the machine learning device 200, and the semantic prediction unit 250 in Fig. 2B trained in advance in a meta-learning process is used for predicting semantic information from the image of the novel class.

The feature extraction unit 220 extracts a feature vector g from an image x of the novel class and provides the feature vector g to the mapping unit 230 and the semantic prediction unit 250.

The semantic prediction unit 250 predicts the semantic vector s from the feature vector g extracted from the image x of the novel class, and provides the semantic vector s to the optimization unit 240 as correct answer data.

The mapping unit 230 infers a semantic vector y from the feature vector g of the novel class and provides the semantic vector y to the optimization unit 240.

The optimization unit 240 calculates the distance in a semantic space between the estimated semantic vector y of the novel class and the correct answer semantic vector s predicted by the semantic prediction unit 250 as a loss, and optimizes the parameters of the mapping unit 230 such that the loss is minimized. Since the parameters are fixed in the feature extraction unit 220 so as not to forget the knowledge of the base class, the parameters are not optimized here. As a result, the mapping unit 230 is fine-tuned using the novel class.

When semantic information is added to the image of the novel class, it is only necessary for the semantic vector generation unit 210 to generate the correct answer semantic vector from the semantic information of the image of the novel class using the configuration explained in Fig. 2A and perform the same learning as that for the base class. This configuration makes it possible to learn and infer a novel class regardless of the presence or absence of semantic information corresponding to the novel class.

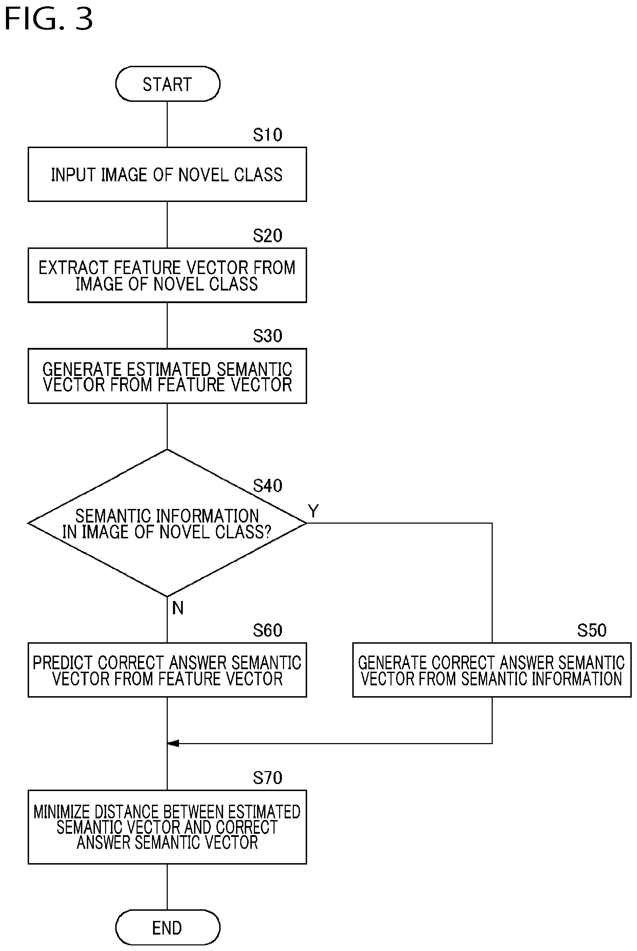

Fig. 3 is a flowchart explaining an incremental few-shot learning procedure performed by the machine learning device 200 according to the present embodiment.

An image of a novel class is input to the machine learning device 200 (S10). The feature extraction unit 220 extracts a feature vector from the image of the novel class (S20).

The mapping unit 230 generates an estimated semantic vector from the feature vector of the image of the novel class (S30).

When semantic information is added to the image of the novel class (Y at S40), the semantic vector generation unit 210 generates a correct answer semantic vector from the semantic information of the image of the novel class (S50).

When semantic information is not added to the image of the novel class (N at S40), the semantic prediction unit 250 predicts a correct answer semantic vector from the feature vector of the image of the novel class (S60).

The optimization unit 240 optimizes the parameters of the mapping unit 230 such that the distance between the estimated semantic vector and the correct answer semantic vector is minimized (S70).

The various processes of a machine learning device 200 explained above can be realized as a device using hardware such as a CPU and memory. Alternatively, the processes can be implemented by firmware stored in a read-only memory (ROM), a flash memory, etc., or by software on a computer, etc. The firmware program or the software program may be made available on, for example, a computer readable recording medium. Alternatively, the programs may be transmitted to and/or received from a server via a wired or wireless network. Still alternatively, the programs may be transmitted and/or received in the form of data transmission over terrestrial or satellite digital broadcast systems.

As described above, the machine learning device 200 according to the present embodiment generates a pseudo few-shot class from a base class and trains, in advance in a meta-learning process, a semantic prediction unit that predicts semantic information from an input image of the pseudo few-shot class. When a small number of novel classes are learned, the semantic prediction information generated by the semantic prediction unit trained in a meta-learning process is used as correct answer data so as to continuously learn the novel classes. This makes it possible to learn and infer novel classes without semantic information.

### INDUSTRIAL APPLICABILITY

The present invention is applicable to machine learning technology.

### REFERENCE SIGNS LIST

100 machine learning device, 110 semantic vector generation unit, 120 feature extraction unit, 130 mapping unit, 140 optimization unit, 200 machine learning device, 210 semantic vector generation unit, 220 feature extraction unit, 230 mapping unit, 240 optimization unit, 250 semantic prediction unit

## Claims

1. A machine learning device (200) for performing incremental few-shot
learning of an image classification task, the device comprising:
a feature extraction unit (220) that is configured to extract a feature vector from an input image;
a semantic vector generation unit (210) that is configured to generate a semantic vector from semantic information added to the input image;
a semantic prediction unit (250) that is configured to generate a second semantic vector from the feature vector of the input image;
a mapping unit (230) that has learned a base class and that is configured to generate a third semantic vector from the feature vector of the input image; and
an optimization unit (240) that is configured to optimize parameters of the mapping unit (230) using the second semantic vector generated by the semantic prediction unit (250) as a correct answer semantic vector such that a distance between the third semantic vector generated by the mapping unit (230) and the correct answer semantic vector is minimized when learning the novel class using as input image an image of the novel class that does not have semantic information added to the image,
wherein
the semantic prediction unit (250) has been trained in advance in a meta-learning process such that a distance between a first semantic vector generated by the semantic vector generation unit (210) from semantic information added to an input image of a pseudo few-shot class and a second semantic vector generated by the semantic prediction unit (250) from a feature vector extracted by the feature unit (220) from the input image of the pseudo few-shot class is minimized, wherein the input image of the pseudo few-shot class is an image selected from images of the base class.

2. The machine learning device (200) according to Claim 1, wherein the optimization unit (240) is configured to optimize the parameters of the mapping unit (230) such that a distance between an estimated semantic vector generated by the mapping unit (230) and a first correct answer semantic vector generated by the semantic vector generation unit (210) is minimized when semantic information is added to the input image of the novel class.

3. A machine learning method for performing incremental few-shot learning of an image classification task, the method comprising:
extracting a feature vector from an input image;
generating a first semantic vector from semantic information added to the input image;
generating a second semantic vector from the feature vector of the input image by using a semantic prediction module;
generating a third semantic vector from the feature vector of the input image by using a mapping module that has learned a base class; and
optimizing parameters of the mapping module using the second semantic vector generated by the semantic prediction module as a correct answer semantic vector such that a distance between the third semantic vector generated by the mapping module and the correct answer semantic vector is minimized when learning the novel class using as input image an image of the novel class that does not have semantic information added to the image, wherein
the semantic prediction module has been trained in advance in a meta-learning process such that a distance between a first semantic vector generated from semantic information added to an input image of a pseudo few-shot class and a second semantic vector generated by the semantic prediction module from a feature vector extracted from the input image of the pseudo few-shot class is minimized, wherein the input image of the pseudo few-shot class is an image selected from images of the base class.

4. A machine learning program for performing incremental few-shot learning of an image classification task, the program comprising modules including:
a feature extraction module that, when the program is executed by a computer, causes the computer to extract a feature vector from an input image;
a semantic vector generation module that, when the program is executed by the computer, causes the computer to generate a first semantic vector from semantic information added to the input image;
a semantic prediction module that, when the program is executed by the computer, causes the computer to generate a second semantic vector from the feature vector of the input image;
a mapping module that has learned a base class and that, when the program is executed by the computer, causes the computer to generate a third semantic vector from the feature vector of the input image; and
an optimization module that, when the program is executed by the computer, causes the computer to optimize parameters of the mapping module using the second semantic vector generated by the semantic prediction module as a correct answer semantic vector such that a distance between the third semantic vector generated by the mapping module and the correct answer semantic vector is minimized when learning the novel class using as input image an image of the novel class that does not have semantic information added to the image,
wherein the semantic prediction module has been trained in advance in a meta-learning process such that a distance between a first semantic vector generated by the semantic vector generation unit (210) from semantic information added to an input image of a pseudo few-shot class and a second semantic vector generated by the semantic prediction unit (250) from a feature vector extracted by the feature unit (220) from the input image of the pseudo few-shot class is minimized, wherein the input image of the pseudo few-shot class is an image selected from images of the base class.

## Patentansprüche

1. Eine Maschinenlernvorrichtung (200) für das Durchführen eines inkrementellen Few-Shot-Lernens einer Bildklassifikationsaufgabe, wobei die Vorrichtung aufweist:
eine Merkmalsextraktionseinheit (220), die konfiguriert ist zum Extrahieren eines Merkmalsvektors aus einem Eingabebild,
eine Semantischer-Vektor-Generierungseinheit (210), die konfiguriert ist zum Generieren eines semantischen Vektors aus zu dem Eingabebild hinzugefügten semantischen Informationen,
eine semantische Prädiktionseinheit (250), die konfiguriert ist zum Generieren eines zweiten semantischen Vektors aus dem Merkmalsvektor des Eingabebilds,
eine Mapping-Einheit (230), die eine Basisklasse gelernt hat und konfiguriert ist zum Generieren eines dritten semantischen Vektors aus dem Merkmalsvektor des Eingabebilds, und
eine Optimierungseinheit (240), die konfiguriert ist zum Optimieren von Parametern der Mapping-Einheit (230) unter Verwendung des zweiten semantischen Vektors, der durch die semantische Prädiktionseinheit (250) als ein semantischer Korrekte-Antwort-Vektor generiert wird, sodass eine Distanz zwischen dem dritten semantischen Vektor, der durch die Mapping-Einheit (230) generiert wird, und dem semantischen Korrekte-Antwort-Vektor minimiert wird, wenn die neue Klasse unter Verwendung eines Bilds der neuen Klasse, das keine zu dem Bild hinzugefügten semantischen Informationen aufweist, als eines Eingabebilds gelernt wird,
wobei die semantische Prädiktionseinheit (250) zuvor in einem Metalernprozess derart trainiert wurde, dass eine Distanz zwischen einem ersten semantischen Vektor, der durch die Semantische-Vektor-Generierungseinheit (210) aus zu einem Eingabebild einer Pseudo-Few-Shot-Klasse hinzugefügten semantischen Informationen generiert wird, und einem zweiten semantischen Vektor, der durch die semantische Prädiktionseinheit (250) aus einem durch die Merkmalseinheit (220) aus dem Eingabebild der Pseudo-Few-Shot-Klasse extrahierten Merkmalsvektor generiert wird, minimiert wird, wobei das Eingabebild der Pseudo-Few-Shot-Klasse ein aus Bildern der Basisklasse ausgewähltes Bild ist.

2. Maschinenlernvorrichtung (200) nach Anspruch 1, wobei die Optimierungseinheit (240) konfiguriert ist zum Optimieren der Parameter der Mapping-Einheit (230), sodass eine Distanz zwischen einem geschätzten semantischen Vektor, der durch die Mapping-Einheit (230) generiert wird, und einem ersten semantischen Korrekte-Antwort-Vektor, der durch die Semantischer-Vektor-Generierungseinheit (210) generiert wird, minimiert wird, wenn semantische Informationen zu dem Eingabebild der neuen Klasse hinzugefügt werden.

3. Ein Maschinenlernverfahren für das Durchführen eines inkrementellen Few-Shot-Lernens einer Bildklassifizierungsaufgabe, wobei das Verfahren aufweist:
Extrahieren eines Merkmalsvektors aus einem Eingabebild,
Generieren eines ersten semantischen Vektors aus zu dem Eingabebild hinzugefügten semantischen Informationen,
Generieren eines zweiten semantischen Vektors aus dem Merkmalsvektor des Eingabebilds unter Verwendung eines semantischen Prädiktionsmoduls,
Generieren eines dritten semantischen Vektors aus dem Merkmalsvektor des Eingabebilds unter Verwendung eines Mapping-Moduls, das eine Basisklasse gelernt hat, und
Optimieren von Parametern des Mapping-Moduls unter Verwendung des zweiten semantischen Vektors, der durch das semantische Prädiktionsmodul als ein semantischer Korrekte-Antwort-Vektor generiert wird, sodass eine Distanz zwischen dem dritten semantischen Vektor, der durch das Mapping-Modul generiert wird, und dem semantischen Korrekte-Antwort-Vektor minimiert wird, wenn die neue Klasse unter Verwendung eines Eingabebilds der neuen Klasse, das keine zu dem Bild hinzugefügten semantischen Informationen aufweist, als eines Eingabebilds gelernt wird,
wobei das semantische Prädiktionsmodul zuvor in einem Metalernprozess derart trainiert wurde, dass eine Distanz zwischen einem ersten semantischen Vektor, der aus zu einem Eingabebild einer Pseudo-Few-Shot-Klasse hinzugefügten semantischen Informationen generiert wird, und einem zweiten semantischen Vektor, der durch das semantische Prädiktionsmodul aus einem aus dem Eingabebild der Pseudo-Few-Shot-Klasse extrahierten Merkmalsvektor generiert wird, minimiert wird, wobei das Eingabebild der Pseudo-Few-Shot-Klasse ein aus Bildern der Basisklasse ausgewähltes Bild ist.

4. Ein Maschinenlernprogramm für das Durchführen eines inkrementellen Few-Shot-Lernens einer Bildklassifizierungsaufgabe, wobei das Programm die folgenden Module aufweist:
ein Merkmalsextraktionsmodul, das, wenn das Programm durch einen Computer ausgeführt wird, den Computer veranlasst zum Extrahieren eines Merkmalsvektors aus einem Eingabebild,
ein Semantischer-Vektor-Generierungsmodul, das wenn das Programm durch den Computer ausgeführt wird, den Computer veranlasst zum Generieren eines ersten semantischen Vektors aus zu dem Eingabebild hinzugefügten semantischen Informationen,
ein semantisches Prädiktionsmodul, das wenn das Programm durch den Computer ausgeführt wird, den Computer veranlasst zum Generieren eines zweiten semantischen Vektors aus dem Merkmalsvektor des Eingabebilds,
ein Mapping-Modul, das eine Basisklasse gelernt hat und das, wenn das Programm durch den Computer ausgeführt wird, den Computer veranlasst zum Generieren eines dritten semantischen Vektors aus dem Merkmalsvektor des Eingabebilds, und
ein Optimierungsmodul, das wenn das Programm durch den Computer ausgeführt wird, den Computer veranlasst zum Optimieren von Parametern des Mapping-Moduls unter Verwendung des zweiten semantischen Vektors, der durch das semantische Prädiktionsmodul als ein semantischer Korrekte-Antwort-Vektor generiert wird, sodass eine Distanz zwischen dem dritten semantischen Vektor, der durch das Mapping-Modul generiert wird, und dem semantischen Korrekte-Antwort-Vektor minimiert wird, wenn die neue Klasse unter Verwendung eines Eingabebilds der neuen Klasse, das keine zu dem Bild hinzugefügte semantische Informationen aufweist, als eines Eingabebilds gelernt wird,
wobei das semantische Prädiktionsmodul zuvor in einem Metalernprozess derart trainiert wurde, dass eine Distanz zwischen einem ersten semantischen Vektor, der durch die Semantische-Vektor-Generierungseinheit (210) aus zu einem Eingabebild einer Pseudo-Few-Shot-Klasse hinzugefügten semantischen Informationen generiert wird, und einem zweiten semantischen Vektor, der durch die semantische Prädiktionseinheit (250) aus einem durch die Merkmalseinheit (220) aus dem Eingabebild der Pseudo-Few-Shot-Klasse extrahierten Merkmalsvektor generiert wird, minimiert wird, wobei das Eingabebild der Pseudo-Few-Shot-Klasse ein aus Bildern der Basisklasse ausgewähltes Bild ist.

## Revendications

1. Dispositif d'apprentissage automatique (200) de mise en œuvre d'un apprentissage incrémentiel en quelques coups d'une tâche de classification d'image, le dispositif comprenant :
une unité d'extraction de caractéristiques (220) qui est configurée pour extraire un vecteur de caractéristiques à partir d'une image d'entrée ;
une unité de génération de vecteurs sémantiques (210) qui est configurée pour générer un vecteur sémantique à partir d'informations sémantiques ajoutées à l'image d'entrée ;
une unité de prédiction sémantique (250) qui est configurée pour générer un deuxième vecteur sémantique à partir du vecteur de caractéristiques de l'image d'entrée ;
une unité de mise en correspondance (230) qui a appris une classe de base et qui est configurée pour générer un troisième vecteur sémantique à partir du vecteur de caractéristiques de l'image d'entrée ; et
une unité d'optimisation (240) qui est configurée pour optimiser des paramètres de l'unité de mise en correspondance (230) en utilisant le deuxième vecteur sémantique généré par l'unité de prédiction sémantique (250) en tant que vecteur sémantique de réponse correcte, de sorte que la distance entre le troisième vecteur sémantique généré par l'unité de mise en correspondance (230) et le vecteur sémantique de réponse correcte soit minimisée pendant un apprentissage de la nouvelle classe utilisant en tant qu'image d'entrée une image de la nouvelle classe qui n'a pas d'informations sémantiques ajoutées à l'image,
dans lequel l'unité de prédiction sémantique (250) a été entraîné préalablement dans un processus de méta-apprentissage de sorte qu'une distance entre un premier vecteur sémantique généré par l'unité de génération de vecteurs sémantiques (210) à partir d'informations sémantiques ajoutées à une image d'entrée d'une pseudo classe à quelques coups et un deuxième vecteur sémantique généré par l'unité de prédiction sémantique (250) à partir d'un vecteur de caractéristiques extrait par l'unité d'extraction de caractéristiques (220) à partir de l'image d'entrée de la pseudo classe à quelques coups soit minimisée, dans lequel l'image d'entrée de la pseudo classe à quelques coups est une image sélectionnée à partir des images de la classe de base.

2. Dispositif d'apprentissage automatique (200) selon la revendication 1, dans lequel l'unité d'optimisation (240) est configurée pour optimiser les paramètres de l'unité de mise en correspondance (230) de sorte que la distance entre un vecteur sémantique estimé généré par l'unité de mise en correspondance (230) et un vecteur sémantique de réponse correcte généré par l'unité de génération de vecteurs sémantiques (210) soit minimisée lorsque des informations sémantiques sont ajoutées à l'image d'entrée de la nouvelle classe.

3. Procédé d'apprentissage automatique de mise en œuvre d'un apprentissage incrémentiel en quelques coups d'une tâche de classification d'image, le procédé comprenant :
l'extraction d'un vecteur de caractéristiques à partir d'une image d'entrée ;
la génération d'un premier vecteur sémantique à partir d'informations sémantiques ajoutées à l'image d'entrée ;
la génération d'un deuxième vecteur sémantique à partir du vecteur de caractéristiques de l'image d'entrée en utilisant un module de prédiction sémantique ;
la génération d'un troisième vecteur sémantique à partir du vecteur de caractéristiques de l'image d'entrée en utilisant un module de mise en correspondance qui a été entraîné avec une classe de base ; et
l'optimisation de paramètres du module de mise en correspondance en utilisant le deuxième vecteur sémantique généré par le module de prédiction sémantique en tant que vecteur sémantique de réponse correcte, de sorte que la distance entre le troisième vecteur sémantique généré par le module de mise en correspondance et le vecteur sémantique de réponse correcte soit minimisée pendant un apprentissage de la nouvelle classe utilisant en tant qu'image d'entrée une image de la nouvelle classe qui n'a pas d'informations sémantiques ajoutées à l'image,
dans lequel le module de prédiction sémantique a été entraîné préalablement dans un processus de méta-apprentissage de sorte qu'une distance entre un premier vecteur sémantique généré à partir d'informations sémantiques ajoutées à une image d'entrée d'une pseudo classe à quelques coups et un deuxième vecteur sémantique généré par le module de prédiction sémantique à partir d'un vecteur de caractéristiques extrait à partir de l'image d'entrée de la pseudo classe à quelques coups soit minimisée, dans lequel l'image d'entrée de la pseudo classe à quelques coups est une image sélectionnée à partir d'images de la classe de base.

4. Programme d'apprentissage automatique de mise en œuvre d'un apprentissage incrémentiel en quelques coups d'une tâche de classification d'image, le programme comprenant des modules comportant :
un module d'extraction de caractéristiques qui, lorsque le programme est exécuté par un ordinateur, amène l'ordinateur à extraire un vecteur de caractéristiques à partir d'une image d'entrée ;
un module de génération de vecteurs sémantiques qui, lorsque le programme est exécuté par un ordinateur, amène l'ordinateur à générer un premier vecteur sémantique à partir d'informations sémantiques ajoutées à l'image d'entrée ;
un module de prédiction sémantique qui, lorsque le programme est exécuté par un ordinateur, amène l'ordinateur à générer un deuxième vecteur sémantique à partir du vecteur de caractéristiques de l'image d'entrée ;
un module de mise en correspondance qui a appris une classe de base et qui, lorsque le programme est exécuté par un ordinateur, amène l'ordinateur à générer un troisième vecteur sémantique à partir du vecteur de caractéristiques de l'image d'entrée ; et
un module d'optimisation qui, lorsque le programme est exécuté par un ordinateur, amène l'ordinateur à optimiser des paramètres du module de mise en correspondance en utilisant le deuxième vecteur sémantique généré par le module de prédiction sémantique en tant que vecteur sémantique de réponse correcte, de sorte que la distance entre le troisième vecteur sémantique généré par le module de mise en correspondance et le vecteur sémantique de réponse correcte soit minimisée pendant un apprentissage de la nouvelle classe utilisant en tant qu'image d'entrée une image de la nouvelle classe qui n'a pas d'informations sémantiques ajoutées à l'image,
dans lequel le module de prédiction sémantique a été entraîné préalablement dans un processus de méta-apprentissage de sorte qu'une distance entre un premier vecteur sémantique généré par l'unité de génération de vecteurs sémantiques (210) à partir d'informations sémantiques ajoutées à l'image d'entrée d'une pseudo classe à quelques coups et un deuxième vecteur sémantique généré par l'unité de prédiction sémantique (250) à partir d'un vecteur de caractéristiques extrait par l'unité d'extraction de caractéristiques (220) à partir de l'image d'entrée de la pseudo classe à quelques coups soit minimisée, dans lequel l'image d'entrée de la pseudo classe à quelques coups est une image sélectionnée à partir des images de la classe de base.
